# EUROPEAN PATENT APPLICATION

(11) **EP 4 276 807 A1**
(43) Date of publication of application: **15.11.2023**
(21) Application number: 22736668.9
(22) Date of filing: 08.01.2022
(51) Int. Cl.: G09G 3/14, B44F 7/00, H04N 13/32

(54) **DEVICE FOR GENERATING A QUASI-THREE-DIMENSIONAL IMAGE WITH A VARIABLE DEPTH EFFECT**

(30) Priority: 08.01.2021 RU 2021100026
(71) Applicant: Kino-Mo Ltd, London Greater London SE1 3ER (GB)
(72) Inventor: MALINOUSKI, Dzmitry, London Greater London SE1 3ER (GB); CHYKEYUK, Kiryl, London Greater London SE1 3ER (GB)
(74) Representative: Kromanis, Artis
(86) International application number: PCT/EA2022/050001
(87) International publication number: WO 2022/148519

(57) **Abstract**

The technical solution relates to the field of displaying quasi-three-dimensional images. The technical problem addressed by means of the claimed device for generating a quasi-three-dimensional image with a variable depth effect is that of creating a novel design for a device that allows a higher-quality image to be generated. The claimed device for generating a quasi-three-dimensional image with a variable depth effect comprises a housing having a rear wall, on which the device for generating a quasi-three-dimensional image is arranged, and side walls, wherein the housing flares outward from the rear wall and the device for generating a quasi-three-dimensional image is mounted so as to provide for the formation, on the side walls of the housing, of an unilluminated region and an illuminated region with a boundary therebetween.

## Description

The technical solution relates to the field of displaying quasi-three-dimensional images.

### BACKGROUND OF THE INVENTION

Quasi-three-dimensional imaging devices are known in the prior art, for example, iDiskk (https://www.idiskk.com/idiskk_new/content/7208.html), consisting of LED elements on blades of various shapes (beams), located in front of a transparent disk , which are controlled by the computing module and driven to rotate by the engine.

Known design device forming a quasi-three-dimensional imaging (https://www.dseelab.com/integrate_one?i=0&t=one), in which the LED element (the blades of the LED element) are located in an opaque frame.

Typically, such quasi-3D imaging devices (fans, holographic fans) are placed on walls, racks, or other objects where a three-dimensional object is to be displayed.

The disadvantage of such solutions is that the housing is not used to create a quasi-three-dimensional image, in which two areas (two sections) are formed - illuminated and unilluminated. When changing the contrast of the border between areas and moving the border, the shadows of the object's SP are changed. Changing the shadows inside the housing of the device allows you to change the depth of the image while increasing the realism of its display, i.e. create a high quality quasi-3D effect.

### SUMMARY OF THE INVENTION

The technical problem solved with the help of the claimed device for forming a quasi-three-dimensional image with a changing depth effect is the creation of a new design of the device that provides the formation of a better image.

The technical result is an increase in the volume of the created image by creating a contrasting dynamic light area near the image.

The technical result is achieved due to the fact that the device for forming a quasi-three-dimensional image with a changing depth effect includes a housing containing a rear wall on which a device for forming a quasi-3D image is located. three-dimensional image, and side walls, and the housing is made expanding from the rear wall, while the device for forming a quasi-three-dimensional image is installed in such a way that the formation of unlit and illuminated areas with a border between them is ensured on the side walls of the housing.

In some embodiments, the housing is in the shape of a truncated cone. Moreover, the Cone can be made round (with a circle at the bases) or contain faces.

Thus, the side walls of the device housing can be presented in the form of faces or combined into one (common) side wall if the housing has the shape of a truncated round cone.

In some embodiments, the housing is made in the form of a regular truncated pyramid.

In some embodiments, the housing is made in the form of a regular truncated pyramid, in which the corners connecting the faces are rounded.

In some embodiments, the housing is made in the form of a regular truncated pyramid and additionally contains a front base, while the corners connecting the side walls with the additional front base are rounded.

In some embodiments, the device includes a housing on which images are placed. Thus, additional opaque, translucent and/or colored areas are formed on the housing, due to which the effect of changing image depth is further enhanced.

In some embodiments, the 3D imaging device comprises wide angle LED elements. In some implementations, the angle of illumination of the LEDs is up to 180 degrees.

In some embodiments, the boundary of the transition from the unlit area to the illuminated area is located in the central area of the housing. Those. the border is equidistant (to a greater extent) from the rear wall of the housing and from its outer border, but may shift depending on the change in image brightness.

### DETAILED DESCRIPTION

Below are the terms and their definitions used in the application.

A quasi-three-dimensional image is understood as a flat image, which is perceived by the observer as three-dimensional or volumetric image.

Parallax - (Greek parάllaxiV, from parallagή, "change, alternation") - a change in the apparent position of an object relative to a distant background, depending on the position of the observer.

The design and operation of the device are illustrated by the following figures.
Fig. 1 is a 3/4 front view of the device without side walls, on which are indicated:
   10 - a device for forming a quasi-three-dimensional image with a changing depth effect;
   100 - the housing of the device;
   101 - rear wall (base);
   102 - blades with LED elements.
Fig. 2 - device (side view), which is marked:
   103 - emphasis.
Fig. 3 is a side view of the device in section, on which are additionally indicated:
   104 - illuminated area;
   105 - unlit area;
   108 - the border of the transition from the unlit to the illuminated area;
   A - area (point) of formation (display) of a three-dimensional image;
   B and C - points (areas) where the image is missing.
Fig. 4 - front view, which shows the principle of formation of a contrast transition, where additionally indicated:
   106 - image;
   107 - light circle.

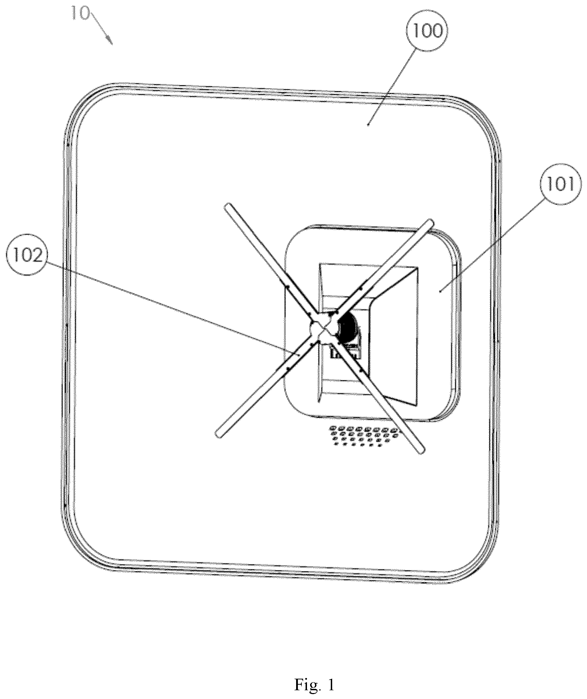

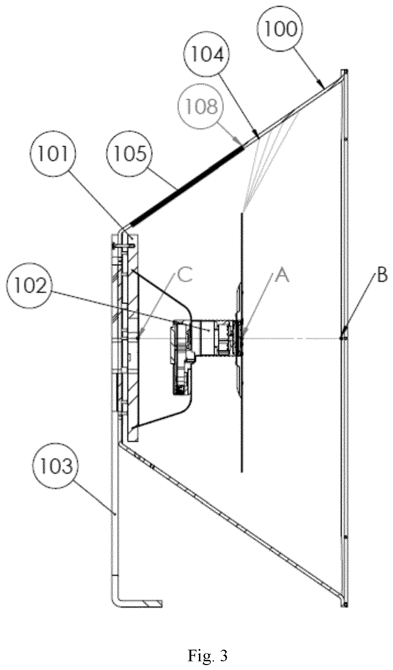

A device for forming a quasi-three-dimensional image with a changing depth effect (Fig. 1, 3) is a housing 100 containing a rear wall 101, on which a device for forming a quasi-three-dimensional (volumetric) Image is located.

The housing 100 includes side walls. The housing 100 is made expanding from the rear wall 101. In this case, the device for forming a quasi-3D image is installed in such a way that on the side walls of the housing 100 the formation of unlit 105 and illuminated areas 104 with a border 108 between them is provided.

The housing 100 of the device can be made as one structural element or divided into several: rear wall, side walls (common wall), front cover. Moreover, the cover can be made completely transparent, translucent or absent.

The housing 100, also as a whole or individual elements (side walls) can be made of a transparent or translucent material, such as plexiglass (plexiglass, polymethyl methacrylate).

The housing 100 can be made in the form of a truncated cone with a round base or another base having faces (square, rectangle, including those with rounded corners). In this case, the side walls of the housing may also have faces.

The rear wall (base) 101 is often made opaque. The quasi-3D imaging device 106 is installed on the base 101.

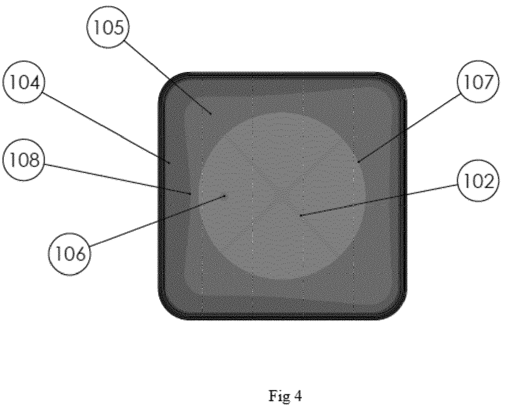

Beams 102 (blades, LED strips) of the quasi-3D imaging device 106, when rotated, form a light circle 107 (Fig. 4), within which an image 106 is displayed. On these beams 102, LED elements (light-emitting diodes) with a wide glow angle are installed. The glow angle can approach 180 degrees. *This results in the part of the sidewall* (face) that is overlapped by the luminous angle of the LEDs being directly exposed to the light from these LEDs, while the rest of the sidewall (face) 105 remains in shadow.

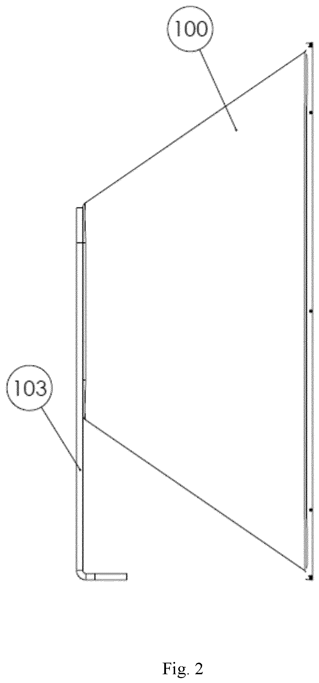

Emphasis 103 allows the device to stand on a plane (Fig. 2). Instead of emphasis 103, a stand may be used. There is also an embodiment of the device in which the emphasis 103 is missing.

FIG. 4 shows the principle of forming a contrast transition 108, which is formed at the border of the illuminated 104 and unilluminated area 105 on the side wall of the device housing 100. The contrast transition (separation boundary between illuminated and unilluminated area 108) is formed as the intersection of the light cone of the image 106 with the side walls of the device. Such a construction allows further creation of effects that help the human eye to see the 3D image 106. The effect of shadows from the 3D image 106 is explained as follows. The closer the image 106 is to the edge of the light circle 107, the closer the contrast transition 108 is to the image 106. Conversely, the closer the image 106 is to the center of the light circle 107, the more the contrast transition 108 moves away from the image 106. At the same time, when the brightness of the image 106 being changed, there is a change in the brightness of the illuminated area on the side wall of the housing 100 of the device. This results in a change in the sharpness of the contrast transition 108, i. e. the transition (border) 108 moves and changes its sharpness following the change in the sharpness of the image 106. To the human eye, this effect is perceived as casting a shadow by the 3D object. In the case when the shadow is clear (transition 108 is clear), then it means that the object is near to the wall, when it is blurry, it means that the object is far away. The transition (boundary) 108 is located on the side wall of the housing 100 approximately in the middle between the rear wall of the housing and the front cover (if any). As a result, the eye perceives the image 106, which is formed in the center of the internal volume of the housing 100 of the device, at point A (Fig. 3).

Thus, the image is formed not in the region of point C (the back of the housing) and not in the region of point B (the outer edge of the housing or front cover), but in the region of point A - approximately in the middle of the internal volume of the housing 100 of the device. This allows a person to reconstruct a 3D image within the volume of the device where there is space for a 3D image. The movements of the shadows of the object described above draw the eye's attention to the contrast transition 108, thereby the human eye understands the presence of the contrast transition even more and understands from this transition that the 3D object is inside the volume (space) of the device.

The quasi-3D imaging device 106 can be controlled by a computing module (not shown in the figure), which can also be implemented using a CPU (Central Processing Unit), SoC (System on a chip) or other technologies that provide the required functionality in terms of computing processing. The volumetric imaging device 106 is rotated (driven) by a motor (electrical motor). The engine and computing module may, for example, be mounted on the rear wall of the housing 100, such as inside the base 101, or in another part of the housing.

The computing module provides processing and receiving data from an external device (for example, a computer, smartphone, tablet, etc.) that transmits data (using wired and wireless data transfer technologies) to be displayed by the volumetric imaging device 106 due to its rotation. Thus, due to the design of the device, an increase in the volume of the created image is ensured when a contrasting dynamic light region is created near the image.

## Claims

1. A quasi-three-dimensional imaging device with a varying depth effect, including a housing containing a rear wall on which the quasi-three-dimensional imaging device is located, and side walls, the housing being made expanding from the rear wall, while the quasi-three-dimensional imaging device is mounted so in such a way that on the side walls of the housing, a formation of unlit and illuminated areas with a border between them is ensured;

2. The device according to claim 1, comprising the housing in the form of a truncated cone.

3. The device according to claim 1, comprising the housing in the form of a regular truncated pyramid.

4. The device according to claim 3, comprising the housing in the form of a regular truncated pyramid, in which corners connecting faces are rounded.

5. The device according to claim 1, comprising the housing in the form of a regular truncated pyramid and additionally containing a front base, while corners connecting the side walls with additional front base are rounded.

6. The device according to claim 1-5, comprising the housing on which images are placed.

7. The device according to claim 1, in which the border of the transition from the unlit to the illuminated area is located in the central zone of the housing.
